# EUROPEAN PATENT APPLICATION

(11) **EP 4 740 820 A2**
(43) Date of publication of application: **13.05.2026**
(21) Application number: 26167856.9
(22) Date of filing: 15.07.2022
(51) Int. Cl.: A47L 11/282

(54) **BASE STATION AND CLEANING ROBOT SYSTEM**

(30) Priority: 24.08.2021 CN 202110975999
(62) Divisional of application: 22860106.8
(71) Applicant: Beijing Roborock Technology Co., Ltd., Beijing 102206 (CN)
(72) Inventor: LI, Xing, Beijing 102206 (CN); CHENG, Pan, Beijing 102206 (CN); YANG, Zhimin, Beijing 102206 (CN)
(74) Representative: Manitz Finsterwald Patent- und Rechtsanwaltspartnerschaft mbB

(57) **Abstract**

A base station (20) and a cleaning robot (10) system. The base station (20) comprises: a base station body (21) provided with a cleaning tank (22); and a filter apparatus (40) provided in the cleaning tank (22), the filter device (40) being provided with a float assembly (41), and the float assembly (41) comprising a float body (411) which floats on the surface of the liquid under the action of the liquid. One of a non-contact sensing element and a non-contact sensed element is provided on the float body (411), and the other is provided on the base station body (21), such that when the filtering device (40) is provided in the cleaning tank (22) and the liquid surface in the cleaning tank (22) is within a specific range, the non-contact sensing element may sense the non-contact sensed element. This enables the filtering device (40) to filter the liquid discharged from the cleaning tank (22), and the liquid level in the cleaning tank (22) and the mounting position of the filtering device (40) relative to the base station body (21) can be detected by means of cooperation among the float body (411), the non-contact sensing element and the non-contact sensed element.

## Description

### CROSS-REFERENCE TO RELATED APPLICATION

This application claims priority to Chinese Patent Application No. 202110975999.1 filed on August 24, 2021, which is incorporated herein by reference in its entirety.

### TECHNICAL FIELD

The present disclosure relates to the field of smart home technologies and, in particular, to a base station and a cleaning robot system.

### BACKGROUND

In an existing base station, cleaning components are typically provided to clean a flat mop cloth of a sweeping and mopping integrated cleaning robot. At the same time, during the cleaning process, debris is collected into a cleaning tank. Due to the presence of solid debris, sewage pipes will be blocked during a sewage discharge process of the cleaning tank.

### SUMMARY

A series of simplified concepts is introduced in the present disclosure, which will be further described in detail in the DETAILED DESCRIPTION part. This part of the present disclosure does not intend to limit the key features and essential technical features of the claimed technical solution, and does not mean to determine the protection scope of the claimed technical solution.

An embodiment of a first aspect of the present disclosure provides a base station, including a base station body, provided with a cleaning tank; and a filtration apparatus, positioned in the cleaning tank. The filtration apparatus is provided with a float assembly, and the float assembly includes a float body floating on a surface of liquid under the action of the liquid. One of a non-contact sensing element and a non-contact sensed element is positioned on the float body, and the other is positioned on the base station body. When the filtration apparatus is positioned in the cleaning tank and the surface of the liquid in the cleaning tank is within a specific range, the non-contact sensing element is capable of detecting the non-contact sensed element.

Further, the filtration apparatus is positioned on at least one side of the bottom part of the cleaning tank.

Further, a high liquid-level value of the cleaning tank is a first preset threshold, and the specific range is less than or equal to the first preset threshold.

Further, the non-contact sensed element is positioned on the float body; and the non-contact sensing element is positioned on the base station body.

Further, the non-contact sensed element includes a magnetic member; and the non-contact sensing element includes a magnetic sensing element.

Further, the non-contact sensing element is electrically connected to a controller of the base station to output a sensing result to the controller.

Further, the filtration apparatus includes a filter screen and a housing. The filter screen is provided above the housing and encloses an accommodating cavity with the housing. The filter screen is used to filter part of the impurities carried by liquid flowing into the accommodating cavity through the cleaning tank. The accommodating cavity is used to accommodate part of the solid impurities carried by the liquid in the accommodating cavity.

Further, the filter screen is further provided with a fence. The fence and part of an outer edge of the filter screen are connected and enclose a mounting space in communication with the accommodating cavity. The float body is located in the mounting space along a horizontal direction. Filter holes are provided in the filter screen outside the mounting space.

Further, the float assembly includes a mounting bracket, detachably positioned on the filter screen or formed on the filter screen; and a connector, which connects the mounting bracket and one end of the float body so that the float body is rotatable relative to the mounting bracket.

Further, the base station is provided with a sewage outlet. The filtration apparatus further includes a water outlet in communication with the accommodating cavity and the sewage outlet. The water outlet is located on at least one side of the filtration apparatus, and the water outlet is higher than the bottom surface of the accommodating cavity.

Further, the filtration apparatus includes a handle positioned on the filter screen.

Further, the handle is positioned on or formed on the filter screen and includes a protruding portion connected to the filter screen. A stop portion is provided on an outer edge of an end of the protruding portion away from the filter screen.

Further, opening and closing of the accommodating cavity between the filter screen and the housing are implemented through a pivot mechanism.

Further, the bottom part of the cleaning tank is provided with a mounting groove, the accommodating cavity is adapted to be located in the mounting groove, and a first foolproof positioning member and a second foolproof positioning member are provided from top to bottom in the cleaning tank. The filtration apparatus is further provided with a foolproof limiting member and an indicating member. When the foolproof limiting member matches the first foolproof positioning member, the indicating member indicates that the filtration apparatus is not mounted in place. When the foolproof limiting member matches the second foolproof positioning member, the indicating member indicates that the filtration apparatus is mounted in place.

Further, the first foolproof positioning member and the second foolproof positioning member are positioned above the mounting groove.

Further, the indicating member includes a planar structure provided above the foolproof limiting member. When the foolproof limiting member matches the first foolproof positioning member, the planar structure is higher than the cleaning tank, indicating that the filtration apparatus is not mounted in place. When the foolproof limiting member matches the second foolproof positioning member, the planar structure is provided below the tank top or flush with the tank top, indicating that the filtration apparatus is mounted in place.

Further, the filtration apparatus includes a connecting portion connected with the filter screen and extending beyond the mounting groove. The foolproof limiting member is positioned on the mounting portion. An end of the connecting portion away from the filter screen is provided with the planar structure.

Further, both the first foolproof positioning member and the second foolproof positioning member are elastic members. The first foolproof positioning member includes a first abutting portion adapted to abut against the foolproof limiting member. The second foolproof positioning member includes a second abutting portion adapted to abut against the foolproof limiting member. The first abutting portion is positioned above the second abutting portion.

Further, the first foolproof positioning member includes a first supporting portion connecting the first abutting portion and the base station body, and the second foolproof positioning member includes a second supporting portion connecting the second abutting portion and the base station body. The first supporting portion and/or the second supporting portion are bent structures, and the bent structure is at least one of L-shaped, Z-shaped, V-shaped, N-shaped, or M-shaped.

An embodiment of the second aspect of the present disclosure provides a cleaning robot system, including a cleaning robot and the base station, according to any one embodiment of the first aspect. The cleaning robot is configured to dock on the base station.

According to the base station and the cleaning robot system provided by the embodiments of the present disclosure, the base station includes a base station body, a filtration apparatus, a non-contact sensing element, and a non-contact sensed element. The base station body is provided with a cleaning tank. The filtration apparatus is positioned in the cleaning tank and configured to filter liquid discharged from the cleaning tank. The filtration apparatus is provided with a float assembly. By disposing one of the non-contact sensing element and the non-contact sensed element on the float body, and disposing the other on the base station body, when the filtration apparatus is positioned in the cleaning tank and the surface of the liquid in the cleaning tank is within a specific range, the non-contact sensing element is capable of detecting the non-contact sensed element. In other words, in the base station provided by the embodiments of the present disclosure, by disposing the float assembly in the filtration apparatus in cooperation with the non-contact sensing element and the non-contact sensed element, the filtration apparatus can filter the liquid discharged from the cleaning tank. At the same time, a liquid level in the cleaning tank and a mounting position of the filtration apparatus relative to the base station body can be detected. This expands and diversifies functions of the filtration apparatus, meets the design requirement of a base station with a compact structure, and expands the application scope of the product.

The above description is merely a summary of the technical solutions of the present application. In order to understand the technical means of the present application more clearly and implement according to the content of the detailed description, and further make the above and other objectives, features, and advantages of the present application more obvious and comprehensible, the specific embodiments of the present application are listed below.

### BRIEF DESCRIPTION OF THE DRAWINGS

The following drawings of the present disclosure are used herein as a part of the embodiments of the present disclosure for understanding the present disclosure. The embodiments of the present disclosure and description thereof are shown in the accompanying drawings to explain principles of the present disclosure.

In the accompanying drawings:
FIG. 1 is a schematic structural diagram of a cleaning robot system according to an optional embodiment of the present disclosure;
FIG. 2 is a schematic structural diagram of a cleaning robot according to an optional embodiment of the present disclosure;
FIG. 3 is a schematic structural diagram of the embodiment shown in FIG. 2 from one perspective;
FIG. 4 is a partial exploded view of the embodiment shown in FIG. 3;
FIG. 5 is a schematic structural diagram of a base station according to an optional embodiment of the present disclosure;
FIG. 6 is a schematic structural diagram of the embodiment shown in FIG. 5 from one perspective;
FIG. 7 is a schematic structural diagram of a cleaning assembly according to an optional embodiment of the present disclosure;
FIG. 8 is a schematic structural diagram of a filtration apparatus according to an optional embodiment of the present disclosure;
FIG. 9 is a schematic structural diagram of the embodiment shown in FIG. 8 from one perspective;
FIG. 10 is a schematic structural diagram of the embodiment shown in FIG. 8 from another perspective;
FIG. 11 is a schematic structural diagram of a filtration apparatus according to another optional embodiment of the present disclosure;
FIG. 12 is a schematic diagram of a partial structure of a base station according to an optional embodiment of the present disclosure; and
FIG. 13 is a schematic structural diagram of a part of the embodiment shown in FIG. 12.

### Reference numerals:

10, Cleaning robot; 110, Robot body; 111, Front part; 112, Rear part; 120, Perception system; 121, Determining apparatus; 122, Buffer; 130, Control module; 140, Driving system; 141, Driving wheel module; 142, Driven wheel; 150, Cleaning system; 151, Dry cleaning system; 152, Side brush; 153, Wet cleaning system; 1531, cleaning head; 1532 Driving unit; 1533, Driving platform; 1534, Supporting platform; 160, Energy system; 170, Human-machine interaction system; 20, Base station; 21, Base station body; 211, Sewage outlet; 22, Cleaning tank; 221, Tank top; 23, Track groove; 241, First foolproof positioning member; 242, Second foolproof positioning member; 243, First abutting portion; 244, First supporting portion; 245, Second abutting portion; 246, Second supporting portion; 30, Cleaning assembly; 31, First cleaning member; 32, Support; 33, Second cleaning member; 34, Liquid discharge apparatus; 40, Filtration apparatus; 41, Float assembly; 411, Float body; 412, Mounting bracket; 413, Connector; 42 Filter screen; 421, Indicating member; 422, Protruding structure; 423, Filter hole; 43, Housing; 44, Water outlet; 45, Handle; 451, protruding portion; 452, Stop portion; 46, Foolproof limiting member; 47, Connecting portion; 48, Fence; and 50, Liquid supply portion.

### DETAILED DESCRIPTION

In the following description, a large number of specific details are given to provide a more thorough understanding of the technical solutions provided by the embodiments of the present disclosure. However, it is obvious to those skilled in the art that the technical solutions provided by the embodiments of the present disclosure may be implemented without one or more of these details.

It should be noted that the terms used herein are merely used for describing the specific embodiments but are not intended to limit exemplary embodiments of the present disclosure. As used herein, singular forms are intended to include plural forms unless otherwise explicitly stated in the context. It should be further understood that the terms "comprise" and/or "include" used in this specification specify the presence of the features, integers, steps, operations, elements, and/or components, but do not exclude the presence or addition of one or more other features, integers, steps, operations, elements, components and/or combinations thereof.

Exemplary embodiments of the present disclosure will now be described in more detail with reference to the accompanying drawings. However, these exemplary embodiments may be embodied in many different forms and should not be construed as limited to only the embodiments set forth herein. It should be understood that these embodiments are provided so that the present disclosure will be thorough and complete, and will fully convey the concept of these exemplary embodiments to those of ordinary skill in the art.

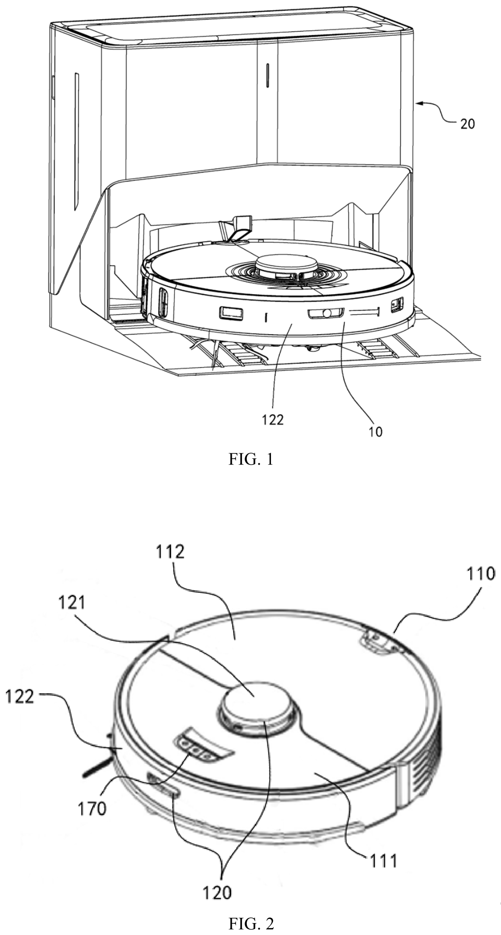

As shown in FIGS. 1 to 13, an embodiment of the present disclosure provides a filtration apparatus, a base station, and a cleaning robot system. As shown in FIG. 1, the cleaning robot system includes a cleaning robot 10 and a base station. That is, the base station is used in cooperation with the cleaning robot 10. The base station includes a filtration apparatus.

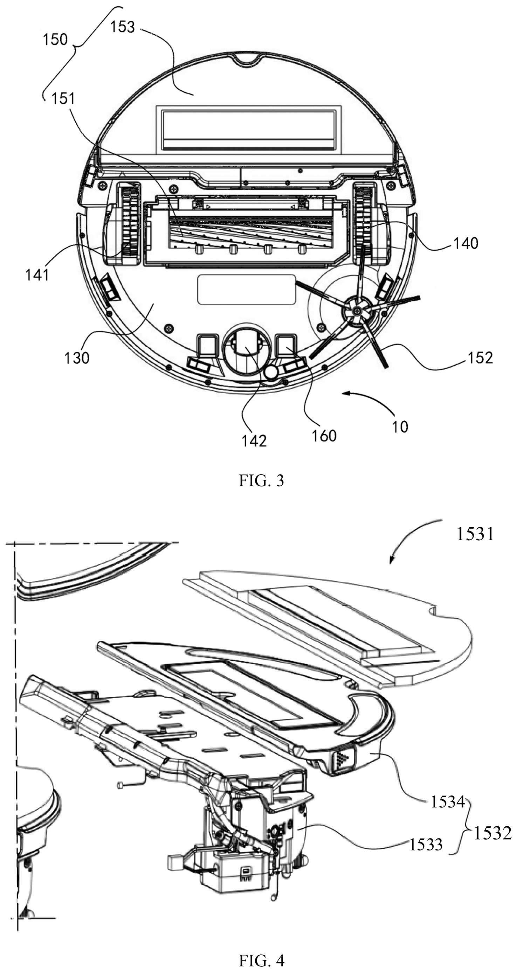

Further, as shown in FIGS. 2 and 3, the cleaning robot 10 may include a robot body 110, a perception system 120, a control module 130, a driving system 140, a cleaning system 150, an energy system 160, and a human-machine interaction system 170. It can be understood that the cleaning robot 10 may be a self-moving cleaning robot 10 or other cleaning robots 10 meeting requirements. The self-moving cleaning robot 10 is a device that automatically performs a cleaning operation in a certain area to be cleaned without operation by a user. When the self-moving cleaning robot 10 starts to work, the automatic cleaning device starts from the base station to perform a cleaning task. When the self-moving cleaning robot 10 completes the cleaning task or needs to stop the cleaning task, the self-moving cleaning robot 10 may return to the base station for charging or another operation.

As shown in FIG. 2, the robot body 110 includes a front part 111 and a rear part 112, and has an approximately circular shape (both front section view and rear section view are circular), and it may also have other shapes, including but not limited to an approximately D-shaped form with a square front section view and a circular rear section view, and a rectangular or square shape with a square front section view and a square rear section view.

As shown in FIG. 2, the perception system 120 includes a position determining apparatus 121 positioned on the robot body 110, a collision sensor and a proximity sensor positioned on a buffer 122 in the front part 111 of the robot body 110, a cliff sensor positioned at the lower part of the robot body 110, and sensing devices such as a magnetometer, an accelerometer, a gyroscope, an odometer and the like positioned inside the robot body 110 for providing various position information and motion state information of the robot to the control module 130. The position determining apparatus 121 includes, but is not limited to, a camera and a laser distance sensor (LDS).

As shown in FIG. 2, the front part 111 of the robot body 110 may carry the buffer 122. When a driving wheel module 141 pushes the cleaning robot 10 to walk on the ground during a cleaning process, the buffer 122 monitors one or more events in the travel path of the cleaning robot 10 through a sensor system positioned on the buffer 122, such as an infrared sensor, and based on an event detected by the buffer 122, such as an obstacle or a wall, the cleaning robot 10 may control the driving wheel module 141 so that the cleaning robot 10 responds to the event, such as moving away from the obstacle.

The control module 130 is positioned on a circuit main board of the robot body 110 and includes a computing processor, such as a central processing unit or an application processor, which is in communication with a non-transitory memory, such as a hard disk, a flash memory, or a random access memory. The application processor generates an instant map of the environment where the cleaning robot 10 is located by using a positioning algorithm such as Simultaneous Localization and Mapping, based on obstacle information fed back by the LDS. Further, in combination with the distance information and the speed information fed back by sensing devices such as the sensor positioned on the buffer 122, the cliff sensor, the magnetometer, the accelerometer, the gyroscope, the odometer, and the like, the application processor comprehensively determines in what working state and at what position the cleaning robot 10 is currently, and also determines a current posture of the cleaning robot 10, such as crossing a door threshold, getting on a carpet, being located at a cliff, being stuck at the upper or lower end, having a full dust box, being picked up, etc. Further, the application processor will also give specific next-step action strategies for different situations so that the cleaning robot 10 has better cleaning performance and user experience.

As shown in FIG. 3, the driving system 140 may operate the robot body 110 to travel across the ground based on a drive command having distance and angular information (for example, x, y, and θ components). The driving system 140 includes the driving wheel module 141, which can simultaneously control left and right wheels. In order to control the movement of the robot more accurately, the driving wheel module 141 may include a left driving wheel module 141 and a right driving wheel module 141. The left and right driving wheel modules 141 are positioned along a transverse axis defined by the robot body 110. In order to enable the cleaning robot 10 to move more stably on the ground or have a stronger movement capability, the cleaning robot 10 may include one or more driven wheels 142. The driven wheels 142 include, but are not limited to, universal wheels. The driving wheel module 141 includes traveling wheels, a driving motor, and a control circuit for controlling the driving motor. The driving wheel module 141 may also be connected with a circuit for measuring a driving current and the odometer. The driving wheels may have a biased drop-type suspension system, and may be movably secured, for example, rotatably attached, to the robot body 110, and receive a spring bias downward and away from the robot body 110. The spring bias allows the driving wheels to maintain contact and traction with the ground with a specific ground force, while the cleaning elements of the cleaning robot 10 also contact the ground with a specific pressure.

The energy system 160 includes a rechargeable battery, such as a nickel-hydrogen battery and a lithium battery. The rechargeable battery may be connected with a charging control circuit, a battery pack charging temperature detection circuit, and a battery undervoltage monitoring circuit. The charging control circuit, the battery pack charging temperature detection circuit, and the battery undervoltage monitoring circuit are connected with a single-chip microcomputer control circuit. The robot is charged by being connected to a charging pile through a charging electrode positioned on a side of or below the robot body.

The human-machine interaction system 170 includes buttons on a panel of the robot for a user to select a function. The human-machine interaction system 170 further includes a display screen and/or an indicator light and/or a loudspeaker for indicating to the user a current state of the robot or the function selected. The human-machine interaction system 170 further includes a client program on a mobile phone. For a path-guided automatic cleaning device, the mobile phone client can display for the user a map of the environment where the device is located, as well as the location of the robot, and may also provide users with more abundant and user-friendly functional items.

The cleaning system 150 may be a dry cleaning system 151 and/or a wet cleaning system 153.

As shown in FIG. 3, the dry cleaning system 151 provided by the embodiments of the present disclosure may include a roller brush, a dust box, a fan, and an air outlet. The roller brush that has a certain interference with the ground sweeps up garbage on the ground and rolls it to the front of a dust suction inlet between the roller brush and the dust box. Then, the garbage is sucked into the dust box by a suction gas generated by the fan that passes through the dust box. The dry cleaning system 151 may further include a side brush 152 having a rotation axis angled relative to the ground, for moving debris into an area of the roller brush of the cleaning system 150.

As shown in FIG. 3 and FIG. 4, the wet cleaning system 153 provided by the embodiments of the present disclosure may include a cleaning head 1531, a driving unit 1532, a water delivery mechanism, a liquid storage tank, and the like. The cleaning head 1531 may be arranged under the liquid storage tank, and cleaning liquid inside the liquid storage tank is transported to the cleaning head 1531 through the water delivery mechanism so that the cleaning head 1531 performs wet cleaning on a surface to be cleaned. In other embodiments of the present disclosure, the cleaning liquid inside the liquid storage tank may also be directly sprayed onto the surface to be cleaned, and the cleaning head 1531 cleans the surface by spreading the cleaning liquid evenly.

The cleaning head 1531 is used to clean the surface to be cleaned, and the driving unit 1532 is used to drive the cleaning head 1531 to reciprocate basically along a target surface, where the target surface is a part of the surface to be cleaned. When the cleaning head 1531 reciprocates along the surface to be cleaned, the cleaning head 1531 generates high-frequency friction with the surface to be cleaned by a reciprocating motion, with a cleaning cloth or a cleaning plate provided on a contact surface between the cleaning head 1531 and the surface to be cleaned, thereby removing stains on the surface to be cleaned.

In an embodiment of the present disclosure, as shown in FIG. 4, the driving unit 1532 may further include a driving platform 1533 and a supporting platform 1534. The driving platform 1533 is connected to the bottom surface of the robot body 110 for providing a driving force. The supporting platform 1534 is detachably connected to the driving platform 1533 for supporting the cleaning head 1531, and the cleaning head 1531 may move up and down when driven by the driving platform 1533.

As an optional embodiment of the present disclosure, the wet cleaning system 153 may be connected with the robot body 110 through an active lifting module. When the wet cleaning system 153 does not participate in work momentarily -for example, when the cleaning robot 10 docks at the base station to clean the cleaning head 1531 of the wet cleaning system 153 and fill the liquid storage tank, or when the wet cleaning system 153 cannot be used to clean the surface to be cleaned-the wet cleaning system 153 is lifted up by the active lifting module.

In the wet cleaning system 153 provided by the embodiments of the present disclosure, the cleaning head 1531, the driving platform 1533, the supporting platform 1534, the water delivery mechanism, and the liquid storage tank, etc., may be powered by one or more motors. The energy system 160 provides power and energy for the motor, and is controlled overall by the control module 130.

The water delivery mechanism in the embodiments of the present disclosure may include a water outlet apparatus, and the water outlet apparatus may be directly or indirectly connected to the liquid outlet of the liquid storage tank. The cleaning liquid may flow to the water outlet apparatus through a cleaning liquid outlet of the liquid storage tank, and may be evenly applied onto the surface to be cleaned by the water outlet apparatus. A connecting member may be provided on the water outlet apparatus, and the water outlet apparatus is connected to the cleaning liquid outlet of the liquid storage tank through the connecting member. A distribution port is provided on the water outlet apparatus. The distribution port may be a continuous opening or a combination of several disconnected small openings. Several nozzles may be provided at the distribution port. The cleaning liquid flows to the distribution port through the cleaning liquid outlet of the liquid storage tank and the connecting member of the water outlet apparatus, and is evenly applied on the surface to be cleaned through the distribution port.

In an embodiment of the present disclosure, the liquid storage tank further includes a water replenishment port, which may be provided on a side wall of the water tank. When the cleaning robot 10 docks at the base station, the base station may fill the liquid storage tank of the cleaning robot 10 with water through the water replenishment port.

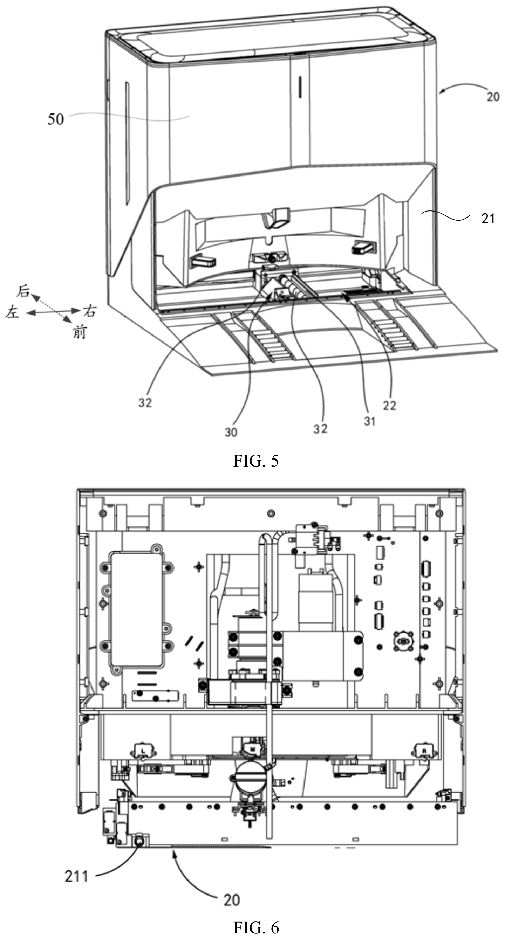

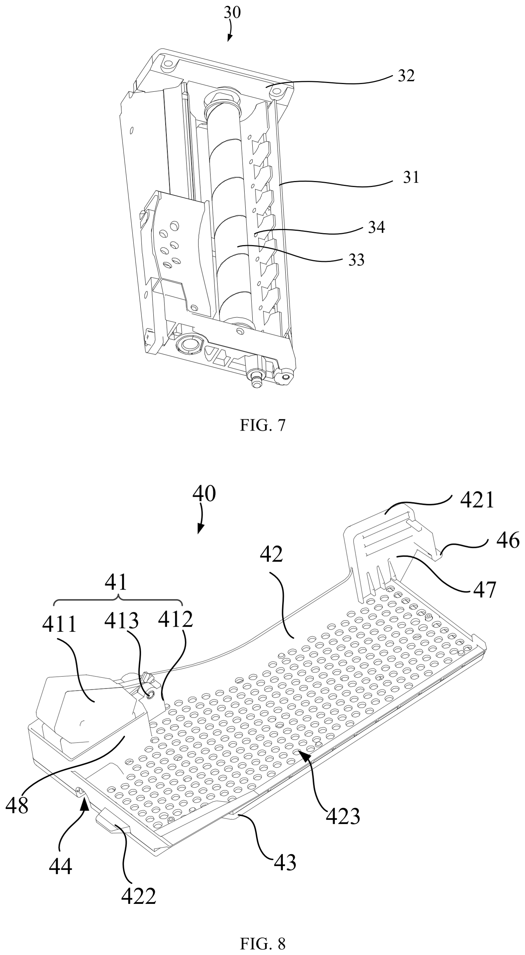

In an embodiment of the present disclosure, as shown in FIG. 5 and FIG. 7, the base station 20 includes a base station body 21 and a cleaning assembly 30. The cleaning assembly 30 may be movably positioned on the base station body 21. Specifically, the cleaning assembly 30 may move relative to the base station body 21 along a specific direction. For example, the cleaning assembly 30 may reciprocate along a left-right direction of the base station 20, and the left-right direction of the base station 20 is shown by a solid arrow in the figure. The cleaning assembly 30 includes a cleaning assembly for removing debris on the cleaning system 150 by interfering with the cleaning system 150. That is to say, when the cleaning robot 10 docks on the base station body 21, the cleaning assembly 30 is located opposite to the cleaning system 150. By interfering with the cleaning system 150, the cleaning assembly 30 removes debris on the cleaning system 150 during the movement of the cleaning assembly 30 relative to the base station body 21. In other words, the cleaning robot 10 can perform automatic cleaning on the cleaning assembly 30 of the base station 20, thereby eliminating the need for manual cleaning of the cleaning system 150 or replacement of a new cleaning system 150, simplifying manual operations and improving manual cleaning experience, and is suitable for popularization and application.

Further, as shown in FIG. 7, the cleaning assembly 30 further includes a liquid outlet apparatus 34. While the cleaning assembly 30 is cleaning the cleaning system 150 of the cleaning robot 10, the liquid outlet apparatus 34 of the cleaning assembly 30 may work simultaneously. The liquid outlet apparatus 34 sprays the cleaning liquid onto the cleaning system 150 to use the impact force of the cleaning liquid to clean the cleaning system 150, or to use the cleaning liquid to infiltrate the cleaning system 150. Therefore, the cleaning effect is improved in the process of cleaning the cleaning system 150 by the cleaning assembly.

Further, the liquid outlet apparatus 34 may spray the cleaning liquid on the cleaning member 33 so that the cleaning liquid is applied onto the cleaning system 150 by the cleaning member, thereby ensuring a good cleaning effect. Specifically, the cleaning assembly 30 includes a support 32, and the cleaning member may include a first cleaning member 31 and a second cleaning member 33 positioned on the support 32. The first cleaning member 31 can be a cleaning scraper, and the second cleaning member 33 can be a cleaning roller. The cleaning roller may rotate by itself so that when the liquid outlet apparatus 34 sprays the cleaning liquid on the cleaning roller, the cleaning liquid can be evenly applied onto the cleaning system 150 through the rotation of the cleaning roller. It can be understood that the liquid outlet apparatus 34 may spray the cleaning liquid on the cleaning system 150 and the second cleaning member 33 at the same time, so as to further improve the infiltration efficiency of the cleaning system 150. Further, as shown in FIG. 5, the base station body 21 is provided with a cleaning tank 22. Specifically, the base station body 21 is provided with the cleaning tank 22 at its lower part, and the cleaning assembly 30 is positioned above the cleaning tank 22. In this way, debris removed from the cleaning system 150 by the cleaning member can be accommodated in the cleaning tank 22, thereby facilitating subsequent processing of the debris and improving the cleanliness of the environment near the base station 20. It can be understood that the debris removed from the cleaning system 150 may include sewage, hair, chips, particle dust, or other debris that meets requirements, which are not specifically limited in the embodiments of the present disclosure. It can be understood that, since the cleaning assembly 30 is located above the cleaning tank22, the cleaning liquid sprayed from the liquid outlet apparatus 34 will be accommodated in the cleaning tank 22 after cleaning the cleaning system 150.

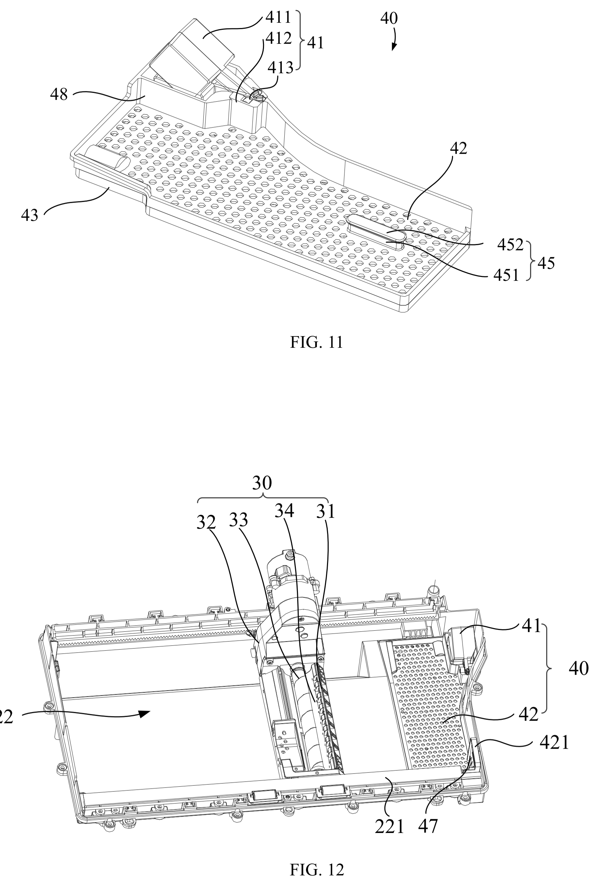

Further, as shown in FIG. 12, the base station 20 further includes a filtration apparatus 40. The filtration apparatus 40 is located in the cleaning tank 22 and is used to filter liquid discharged from the cleaning tank 22. Because the liquid in the cleaning tank 22 is mixed with solid impurities-that is, the cleanliness of the liquid in the cleaning tank 22 is low-if the liquid is directly discharged through the sewage pipe, there is a risk of blocking the sewage pipe. Therefore, by disposing the filtration apparatus 40 in the cleaning tank 22, the liquid discharged from the cleaning tank 22 to the external environment is filtered by the filtration apparatus 40 to improve cleanliness, and then discharged to the external environment through the sewage pipe. This reduces the risk of blocking the sewage pipe, is beneficial to improving the smoothness of sewage discharge from the cleaning tank 22, and improves the sewage discharge efficiency. The filtration apparatus 40 is detachably mounted in the cleaning tank 22 so that it is convenient to detach the filtration apparatus 40 from the cleaning tank 22 for cleaning and maintenance, which is easy to operate and helps to improve the user's cleaning experience and maintenance experience.

In the embodiments provided by the present disclosure, as shown in FIGS. 8 to 12, the filtration apparatus 40 is provided with a float assembly 41. The float assembly 41 includes a float body 411 floating on a surface of liquid under the action of the liquid. The base station 20 further includes a non-contact sensing element or a non-contact sensed element. The non-contact sensing element is used to detect the non-contact sensed element. For example, the non-contact sensing element is used to detect signal parameters emitted by the non-contact sensed element. One of the non-contact sensing element and the non-contact sensed element is positioned on the float body 411, and the other is positioned on the base station body 21. In other words, one of the non-contact sensing element and the non-contact sensed element moves with the floating of the float body 411, and the other is positioned on a fixed position on the base station body 21. For example, the other is located at a position on the base station body 21 at which the filtration apparatus 40 is to be mounted. In this way, in a process in which the float body 411 floats up and down under the action of liquid, the signal parameters emitted by the non-contact sensed element and detected by the non-contact sensing element are different. Then, according to the different signal parameters, a liquid level range in the cleaning tank 22 may be determined, and whether the filtration apparatus 40 is located in the cleaning tank may be determined.

Further, when the filtration apparatus 40 is positioned in the cleaning tank 22, and the liquid surface in the cleaning tank 22 is within a specific range, the non-contact sensing element can detect the non-contact sensed element, indicating that the filtration apparatus 40 is accurately mounted on the base station body 21, and the liquid level in the cleaning tank 22 is within the specific range. For example, the liquid level in the cleaning tank 22 is at a safe level and will not affect the normal operation of the base station. In other words, a detection apparatus composed of the float assembly 41, the non-contact sensing element, and the non-contact sensed element can simultaneously detect the liquid level in the cleaning tank 22 and the current position of the filtration apparatus 40. This expands functions of the float assembly 41 and simplifies the setting of the detection apparatus. That is, a structure of the product is simplified, and a system software program and algorithm are simplified, which can effectively save costs and is suitable for popularization and application.

That is, in the base station 20 provided by the embodiments of the present disclosure, by disposing the float assembly 41 on the filtration apparatus 40 and cooperating with the non-contact sensing element and the non-contact sensed element, the base station 20 can simultaneously detect whether the filtration apparatus 40 is mounted in the cleaning tank 22 and whether the liquid level in the cleaning tank 22 is within a normal range, which simplifies the structure of the base station 20.

Further, the float assembly 41 is positioned on one side of the filtration apparatus 40 so that a good detection effect between the non-contact sensing element and the non-contact sensed element can beachieved, which is beneficial to improving the detection accuracy.

Specifically, on the one hand, the non-contact sensed element is positioned on the float body 411, and the non-contact sensing element is positioned on the base station body 21. And on the other hand, the non-contact sensing element is positioned on the float body 411, and the non-contact sensed element is positioned on the base station body 21. The different positioning of the non-contact sensed element and the non-contact sensing element can meet requirements for different structures and performances of the non-contact sensed element and the non-contact sensing element and expand the application scope of the product.

It can be understood that the non-contact sensed element may include a magnetic member, a light-emitting member, or other components that meet requirements, and the non-contact sensing element may include a magnetic sensing member, an optical sensing member, or other components that meet requirements. The non-contact sensed element or non-contact sensing element positioned on the float body 411 may be located inside or outside of the float body 411, or at other positions meeting requirements, which are not specifically limited in the embodiments of the present disclosure.

In the above embodiments, the filtration apparatus 40 is detachably positioned in the cleaning tank 22 so that the filtration apparatus 40 can be detached from the cleaning tank 22 for cleaning, maintenance or replacement, and it is simple and convenient to operate.

As shown in FIG. 12, the filtration apparatus 40 may be positioned at the bottom part of the cleaning tank 22, which facilitates improving the thoroughness of filtering the liquid in the cleaning tank 22 by the filtration apparatus 40.

The filtration apparatus 40 may be positioned on at least one side of the cleaning tank 22. That is, the filtration apparatus 40 may be only positioned on the bottom part of one side of the cleaning tank 22, or the filtration apparatuses 40 are provided on the bottom parts of both sides of the cleaning tank 22. The different positions of the filtration apparatus 40 can meet requirements for different structures of the filtration apparatus 40 and different filtering efficiencies of the cleaning tank 22 and expand the application scope of the product.

In the above embodiment, a high liquid-level value of the cleaning tank 22 is a first preset threshold value, and the specific range is less than or equal to the first preset threshold value. In other words, when a liquid surface in the cleaning tank 22 is lower than or equal to the high liquid-level value of the cleaning tank 22, and the filtration apparatus 40 is mounted in the cleaning tank 22, the non-contact sensing element can detect the non-contact sensed element. This indicates that the filtration apparatus 40 is mounted in the cleaning tank 22 of the base station body 21, and the liquid level in the cleaning tank 22 is lower than or equal to the high liquid-level value, so the liquid in the cleaning tank 22 will not affect the normal operation of the base station 20. For example, the dirty liquid in the cleaning tank 22 will not have a risk of overflow and will not contaminate the cleaning assembly 30 and the like. At this time, the cleaning tank 22 can continue to accommodate debris and dirty liquid.

Conversely, when the filtration apparatus 40 is not mounted in the cleaning tank 22 of the base station body 21, or when the filtration apparatus 40 is mounted in the cleaning tank 22 of the base station body 21 and the liquid level in the cleaning tank 22 is higher than the specific range, the non-contact sensing element cannot detect the non-contact sensed element. This indicates that the filtration apparatus 40 is not mounted in place, or the liquid level in the cleaning tank 22 is high and the normal operation of the base station 20 may be affected. At this time, the user may be reminded to mount the filtration apparatus 40 on the base station body 21, or stop throwing debris and dirty liquid into the cleaning tank 22.

In the embodiments provided by the present disclosure, the high liquid-level value of the cleaning tank 22 may be a fixed value. That is, the first preset threshold value may be a fixed value. For example, the high liquid-level value of the cleaning tank 22 is 10mm, 20mm, 30mm, 50mm, or other values that meet requirements. Alternatively, the high liquid-level value of the cleaning tank 22 is related to the tank height of the cleaning tank 22. For example, the high liquid-level value of the cleaning tank 22 is 0.95 times, 0.90 times, 0.85 times the tank height of the cleaning tank 22, or other values that meet requirements.

In the above embodiment, the base station 20 further includes a controller, and the cleaning assembly 30 further includes a liquid outlet apparatus 34 electrically connected to the controller. While the cleaning member of the cleaning assembly 30 is cleaning the cleaning system 150 of the cleaning robot 10, the liquid outlet apparatus 34 of the cleaning assembly 30 may work at the same time. The liquid outlet apparatus 34 sprays the cleaning liquid onto the cleaning system 150 so that the impact force of the cleaning liquid is used to clean the cleaning system 150, or the cleaning liquid is used to infiltrate the cleaning system 150, thereby improving the cleaning effect in the process of cleaning the cleaning system 150 by the cleaning member. Since the cleaning assembly 30 is located above the cleaning tank 22, the cleaning liquid will be accommodated in the cleaning tank 22 after cleaning the cleaning system 150.

The non-contact sensing element is electrically connected to the controller of the base station 20 so as to output a sensing result to the controller. It can be understood that the controller of the base station 20 may also perform information interactions with the cleaning robot 10 or a remote control terminal. In this way, it is convenient for the controller to reasonably control the working of other components of the cleaning system 150 according to the sensing result of the non-contact sensing element, such as controlling a working state of the liquid outlet apparatus 34 according to the sensing result. For example, when the non-contact sensing element detects the non-contact sensed element, the liquid outlet apparatus 34 is controlled (for example, alerted or signaled) to continue working. When the non-contact sensing element does not detect the non-contact sensed element, the liquid outlet apparatus 34 is controlled (for example, alerted or signaled) to stop working to prevent the liquid in the cleaning tank 22 from affecting the normal operation of the base station 20. At the same time, when the non-contact sensing element does not detect the non-contact sensed element, the controller may also send a reminder signal to remind the user to check whether the filtration apparatus 40 is mounted in place. Such an arrangement greatly improves the reliability and security of the base station 20 and is suitable for popularization and application.

Further, as shown in FIG. 5, the base station 20 includes a liquid supply portion 50 and a liquid delivery channel. One end of the liquid delivery channel is used to communicate with the liquid supply portion 50, and the other end of the liquid delivery channel is used to communicate with the liquid outlet apparatus 34 so that the liquid supply portion 50 supplies cleaning liquid into the liquid outlet apparatus 34 through the liquid delivery channel.

In some possible embodiments provided by the present disclosure, the non-contact sensed element is positioned on the float body 411, and the non-contact sensing element is positioned on the base station body 21.

Further, the non-contact sensed element includes a magnetic member, and the non-contact sensing element includes a magnetic sensing element-for example, a Hall sensor. The magnetic member is positioned on the float body 411, and the magnetic sensing element is positioned on the base station body 21. Specifically, the magnetic member may be positioned inside the float body 411. Such an arrangement can avoid the problems that due to the magnetic member being positioned outside the float body 411, the liquid will wet the magnetic member and corrode it, cause malfunction, and interfere with signal emission strength. Such an arrangement is therefore beneficial to improve the service life of the magnetic member and the stability and reliability of a transmitted signal.

That is to say, in the base station 20 provided by the embodiments of the present disclosure, the float assembly 41 is positioned on the filtration apparatus 40, the filtration apparatus 40 is positioned in the cleaning tank 22 of the base station 20, the magnetic member is positioned inside the float body 411, and the magnetic sensing element is positioned on the base station body 21. Under the action of liquid, when the magnetic member floats to a detection range of the magnetic sensing element-that is, when the magnetic sensing element can detect a signal of the magnetic member-it indicates that the filtration apparatus 40 is mounted in the cleaning tank 22 and the liquid surface in the cleaning tank 22 is within the specific range. For example, the liquid surface is below the high liquid-level value of the cleaning tank 22. At this time, the control apparatus may control (for example, alert or signal) the liquid outlet apparatus 34 to continue to work, and control (for example, alert or signal) the cleaning assembly 30 to continue to clean the cleaning system 150 of the cleaning robot 10. When the magnetic member floats outside the detection range of the magnetic sensing element-that is, the magnetic sensing element cannot detect a signal of the magnetic member-it indicates that the liquid surface in the cleaning tank 22 may reach or exceed the high liquid-level value of the cleaning tank 22, and thereforce the liquid in the cleaning tank 22 may affect the normal operation of the base station 20, or the filtration apparatus 40 may not be correctly mounted in the cleaning tank 22. At this time, the control apparatus may control (for example, alert or signal) the base station 20 to stop working, such as controlling (for example, alerting or signaling) the liquid outlet apparatus 34 to stop working, to prevent the liquid surface in the cleaning tank 22 from continuing to rise and overflow the cleaning tank 22. At the same time, the control apparatus may also send a reminder signal to remind the user to check whether the filtration apparatus 40 is mounted in place. Such an arrangement has a simple structure, is easy for implementation, has a low cost, and is suitable for popularization and application.

Specifically, the magnetic member may be a magnetic strip, a magnetic ring, or other magnetic structures that meet requirements, and the magnetic sensing element may be a magnetic sensing sensor or other structures that meet requirements. Specifically, the magnetic sensing sensor may be a ring structure or a sheet structure or other structures that meet requirements.

Further, the number of magnetic sensing elements may be one, two, or more. The two or more magnetic sensing elements are located at different positions of the base station body 21, which can detect liquid surfaces at different heights in the cleaning tank 22 reaching different specific ranges. That is, they can detect the liquid surfaces at different heights in the cleaning tank 22, which expands the application scope of the product.

In some possible embodiments provided by the present disclosure, as shown in FIG. 8, FIG. 10, and FIG. 11, the filtration apparatus 40 may include a filter screen 42 and a housing 43. The filter screen 42 is provided on the top of the housing 43 and encloses an accommodating cavity with the housing 43. The filter screen 42 is provided with filter holes 423. The filter screen 42 is used to filter some of the impurities carried by the liquid flowing into the accommodating cavity through the cleaning tank 22. The accommodating cavity is used to accommodate some of the solid impurities carried by the liquid in the accommodating cavity.

Specifically, the dirty liquid in the cleaning tank 22 flows into the accommodating cavity after some impurities are filtered out by the filter holes 423 of the filter screen 42. For example, through the filter screen 42, solid impurities with larger particles, such as hair, etc., in the cleaning tank 22 can be filtered on the filter screen 42, and the dirty liquid and solid impurities with smaller particles flow into the accommodating cavity, which is conducive to improving the cleanliness of the liquid in the accommodating cavity. However, solid impurities such as silt carried in the dirty liquid in the accommodating cavity may be at least partially deposited at the bottom part of the accommodating cavity, and the remaining impurities may be discharged to the external environment along with the liquid through the accommodating cavity. This can improve the smoothness of liquid discharge and reduce the occurrence of blockage of the sewage pipe, thereby helping to improve the sewage discharge efficiency.

Further, the bottom part of the cleaning tank 22 is arranged obliquely downward from the side away from the filtration apparatus 40 to the side close to the filtration apparatus 40, which plays a good guiding role and helps the liquid in the cleaning tank 22 to flow through the filtration apparatus 40 quickly and thoroughly. This is conducive to improving the filtering efficiency and the filtering effect.

That is, in the base station 20 provided by the embodiments of the present disclosure, by disposing the filtration apparatus 40 in the cleaning tank 22, the dirty liquid in the cleaning tank 22 is filtered by the filter screen 42 of the filtration apparatus 40 to filter out the solid impurities with larger particles in the cleaning tank 22, and the solid impurities such as silt in the filtered liquid are deposited at the bottom part of the accommodating cavity. Then, a sewage discharge operation is performed on the relatively clean liquid in the accommodating cavity to discharge the dirty liquid in the cleaning tank 22. Such an arrangement reduces the occurrence of blockage of the sewage pipe and is conducive to improving the sewage discharge efficiency.

In the sewage discharge process, the solid impurities with larger particles will be filtered out to the outside of the accommodating cavity. For example, after the liquid in the cleaning tank 22 is emptied, the solid impurities with larger particles will remain on the filter screen 42, and the solid impurities such as silt will remain at the bottom part of the accommodating cavity. Such an arrangement facilitates the separate treatment of the solid impurities with larger particles and solid impurities such as silt in the accommodating cavity, which is conducive to improving the cleaning experience of the filtration apparatus 40. It can be understood that the size and shape of the filter holes 423 may be reasonably set to limit the filtration accuracy of the filter screen 42. Specifically, the minimum opening size of the filter hole 423 may be 8mm, 10mm, 15mm, or other values that meet requirements, which is not specifically limited in the embodiments of the present disclosure.

In the above embodiment, the float assembly 41 is located outside the accommodating cavity, which can prevent the accommodating cavity from interfering with the floating range of the float assembly 41, thereby improving the detection accuracy of the float assembly 41.

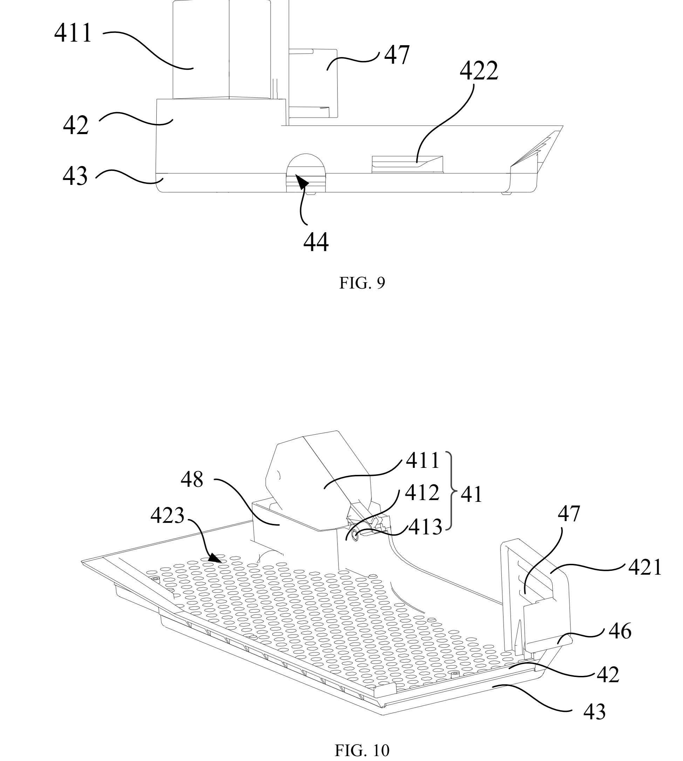

In some possible embodiments provided by the present disclosure, as shown in FIG. 8 and FIG. 10, the filter screen 42 is further provided with a fence 48, the fence 48 is connected with part of an outer edge of the filter screen 42 to enclose a mounting space in communication with the accommodating cavity, and the float body 411 is positioned in the mounting space in a horizontal direction. That is, the float body 411 communicates with the accommodating cavity, which is conducive to improving the accuracy of detecting the liquid level in the cleaning tank 22 by the float assembly 41. By providing the filter holes 423 on the filter screen 42 outside the mounting space, during the sewage discharge process, the impurities with larger particles may remain on the filter screen 42 through the filter holes 423. Providing the fence 48 can protect the float body 411 to a certain extent, can prevent large particles of garbage on the filter screen 42 from affecting the floating precision of the float body 411, and can further improve the detection accuracy of the float assembly 41.

Further, as shown in FIG. 8, FIG. 10, and FIG. 11, the float assembly 41 includes a mounting bracket 412 and a connector 413. The mounting bracket 412 is provided on the filter screen 42, and the connector 413 connects the mounting bracket 412 and one end of the float body 411, so that the float body 411 is rotatable relative to the mounting bracket 412. That is, the float body 411 floats on the surface of the liquid under the action of the liquid, and the float body 411 can swing in a vertical direction relative to the mounting bracket 412. In other words, the float body 411 can swing in a direction approaching the housing 43 and in a direction away from the housing 43 relative to the mounting bracket 412, thereby driving the non-contact sensed element located in the float assembly 41 to swing up and down relative to the housing 43. This, in cooperation with the non-contact sensing element positioned on the base station body 21, helps to realize the detection of the liquid level in the cleaning tank 22 and the determination of whether the filtration apparatus 40 is mounted in the cleaning tank 22.

Specifically, the mounting bracket 412 is provided with a through hole, one end of the float body 411 is provided with a mounting hole, and the connector 413 penetrates the mounting hole and the through hole so that one end of the float body 411 and the mounting bracket 412 can be rotatably connected. The connector 413 may be a rotating shaft, an anchor, or other connectors 413 that meet requirements. An axis of rotation of the float body 411 relative to the mounting bracket 412 is parallel to a plane where the bottom wall of the cleaning tank 22 is located. For example, an axis of the rotating shaft is parallel to a plane where the bottom wall of the cleaning tank 22 is located. Therefore, the float assembly 41 can only swing roughly in the vertical direction relative to the mounting bracket 412, so as to realize accurate measurement of the liquid level.

Further, in an embodiment of the present disclosure, the mounting bracket 412 may be detachably located on the filter screen 42. That is, the float assembly 41 can be quickly and conveniently mounted on the filtration apparatus 40 through the mounting bracket 412 so that the float assembly 41 can be configured in a corresponding product or scenario as a standardized module, which expands the application scope of the float assembly 41. At the same time, the arrangement of the mounting bracket 412 enables the user to detach the float assembly 41 from the filter screen 42 of the filtration apparatus 40 for maintenance and cleaning, which greatly improves the user experience.

In other embodiments of the present disclosure, the mounting bracket 412 is formed on the filter screen 42. That is, the mounting bracket 412 and the filter screen 42 are of an integrated structure. Such an arrangement is convenient for production, simplifies the assembly operation of the mounting bracket 412 and the filter screen 42, is beneficial to improve production efficiency and reduce costs, and improves the reliability of the connection between the mounting bracket 412 and the filter screen 42.

In the above embodiment, the mounting bracket 412 may be located in the mounting space. For example, the mounting bracket 412 may be detachably positioned on the fence 48 or formed on the fence 48. Alternatively, the mounting bracket 412 may be detachably positioned on or formed on a part of the outer edge of the filter screen 42.

It can be understood that the float assembly 41 and the filter screen 42 may be an integrated structure, which is conducive to further improving the production efficiency and reducing the manufacturing costs. For example, the filter screen 42 and the float assembly 41 are integrally formed, and the magnetic member is positioned outside the float assembly 41. Alternatively, the filter screen 42 and the float assembly 41 are both injection-molded parts. During an injection-molding process, the magnetic member is positioned inside the float assembly 41 and integrally formed with the filter screen 42, which further simplifies the assembly process.

In the above embodiment, as shown in FIG. 8 and FIG. 9, the filtration apparatus 40 further includes a water outlet 44 that is in communication with the accommodating cavity and the external environment. The water outlet 44 is located on at least one side of the filtration apparatus 40. That is, the liquid in the accommodating cavity is discharged through the water outlet 44 so as to realize the operation of discharging sewage from the cleaning tank 22.

Further, as shown in FIG. 6, the cleaning tank 22 is provided with a sewage outlet 211. The sewage outlet 211 communicates with the external environment, and the water outlet 44 communicates with the sewage outlet and the accommodating cavity so that the dirty liquid in the cleaning tank 22 flows into the accommodating cavity through the filter screen 42 and is discharged to the external environment from the water outlet 44 through the sewage outlet 211.

Further, the base station 20 may further include a sewage discharge mechanism. The sewage discharge mechanism communicates with the sewage outlet 211 so as to transport the dirty liquid in the accommodating cavity to the outside of the cleaning tank 22 through the water outlet 44 and the sewage outlet 211 by means of a suction action, a pumping action, etc., of the sewage discharging mechanism, to further improve the sewage discharge effect of the base station 20. Specifically, the sewage discharge mechanism may include a fan assembly or a pump body assembly, or a sewage discharge assembly that meets requirements, which is not specifically limited in the embodiments of the present disclosure.

Further, the base station 20 may further include a collecting box. The collecting box communicates with the sewage outlet 211 through the sewage discharge mechanism, so that the dirty liquid in the cleaning tank 22 is transported to the collecting box through the accommodating cavity, the water outlet 44, the sewage outlet 211, and the sewage discharge mechanism, without affecting the cleaning effect of the cleaning member due to the overflow of debris in the cleaning tank 22, and causing the working environment to be dirty. The arrangement of the collecting box is conducive to ensuring a good cleaning effect and facilitates the centralized treatment of the collected debris.

It can be understood that the water outlet 44 may also directly communicate with the sewage discharge mechanism, which simplifies the arrangement of the sewage outlet 211 of the cleaning tank 22 and can also facilitate the removal of the dirty liquid in the cleaning tank 22. Specifically, the water outlet 44 communicates with the sewage outlet 211 or the sewage discharge mechanism through the sewage pipe.

In this embodiment, the water outlet 44 is higher than the bottom surface of the accommodating cavity, which can facilitate the deposition of impurities, and, at the same time, reduce the possibility that the silt deposited at the bottom part of the accommodating cavity flows out through the water outlet 44 along with the water. This further reduces the possibility of blockage of the sewage pipe and improves the sewage discharge efficiency.

The water outlet 44 may be positioned on one side or both sides or multiple sides of the filtration apparatus 40. The different positioning of the water outlet 44 can meet requirements for different sewage discharge efficiency, and can meet requirements for different structures of the filtration apparatus 40 at the same time. This expands the application scope of the product.

In some possible implementations provided by the present disclosure, as shown in FIG. 11, the filtration apparatus 40 further includes a handle 45 positioned on the filter screen 42, and the handle 45 is located outside the accommodating cavity. With the handle 45, it is convenient for the user to quickly mount the filtration apparatus 40 into the cleaning tank 22, or take out the filtration apparatus 40 mounted in the cleaning tank 22 from the cleaning tank 22. In other words, the arrangement of the handle 45 is convenient for the user to hold the filtration apparatus 40 and to mount and detach the filtration apparatus 40, thereby improving the user's operating experience.

In the above embodiment, on the one hand, the handle 45 is positioned on a side of the filter screen 42 away from the housing 43. For example, the handle 45 is positioned on the top of the filter screen 42 and connected with the filter screen 42. Specifically, the handle 45 is detachably connected with the filter screen 42, or connected through a connecting structure, or connected through an adhesive, so as to meet requirements for different structures of the handle 45 and the filter screen 42. On the other hand, the handle 45 is formed on the filter screen 42. For example, the handle 45 is formed on the top of the filter screen 42. That is, the handle 45 is integrated with the filter screen 42 so that it is convenient for processing and facilitates improving the reliability of a connection between the handle 45 and the filter screen 42.

As shown in FIG. 11, the handle 45 includes a protruding portion 451 connected to the filter screen 42. A stop portion 452 is positioned on an outer edge of an end of the protruding portion 451 away from the filter screen 42. Such an arrangement makes it easy for the user to grip the handle. For example, the user can hold the protruding portion 451 and prevent it from falling off due to the stop portion 452, which improves convenience and reliability for the user in holding the handle 45. Specifically, the protruding portion 451 and the stop portion 452 are integrally formed to facilitate processing. Further, a projection of a protruding structure 422 on the filter screen is circular, elliptical, polygonal, or other shapes that meet requirements, which is not specifically limited in the embodiments of the present disclosure.

In some embodiments provided by the present disclosure, on the one hand, the filter screen 42 and the housing 43 form a detachable structure. Such an arrangement makes it easy to separately clean and maintain the filter screen 42 and the housing 43, which is conducive to improving the user's cleaning experience and maintenance experience. The filter screen 42 and the housing 43 arranged in a split structure are convenient for the user to clean up impurities such as silt and the like deposited in the housing 43 after opening the accommodating cavity.

On the other hand, the filter screen 42 and the housing 43 form an integrated structure, which is convenient for production, simplifies assembly operations, and is conducive to improving production efficiency. It can be understood that when the filter screen 42 and the housing 43 are of an integrated structure, the impact force of the liquid can be used to clean the silt deposited in the accommodating cavity. As for solid impurities with large particles remaining on the filter screen 42, they can be directly cleaned since they are located outside the accommodating cavity.

Further, one of the filter screen 42 and the housing 43 is provided with a limiting structure, and the other is provided with a positioning structure. A detachable connection between the filter screen 42 and the housing 43 is realized through the matching of the limiting structure and the positioning structure.

Specifically, the limiting structure may include a groove, and the positioning structure may include a protrusion matching the groove. Alternatively, the limiting structure may include a magnetic member, and the positioning structure may include a magnetic attraction member matching the magnetic member. It can be understood that the limiting structure and the positioning structure may alternatively be other structures that meet requirements, which are not specifically limited in the embodiments of the present disclosure.

In addition, the filter screen 42 and the housing 43 in the embodiments of the present disclosure may alternatively be pivotally connected to realize the opening and closing of the accommodating cavity of the filtration apparatus 40, which makes it easy for the user to clean up the debris in the accommodating cavity. For example, the filter screen 42 and the housing 43 may be connected by a pivot shaft.

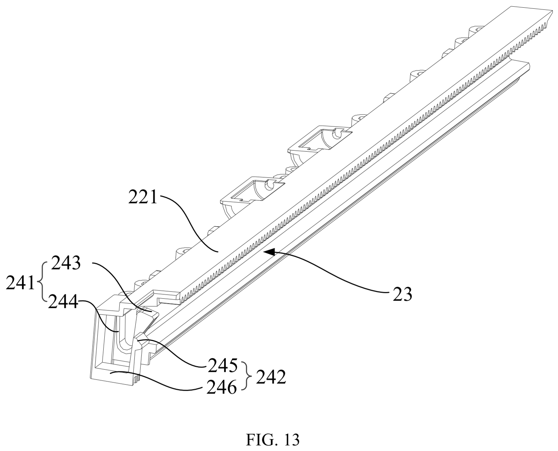

In some possible embodiments provided by the present disclosure, as shown in FIG. 12 and FIG. 13, the bottom part of the cleaning tank 22 is provided with a mounting groove, and the filter screen 42 is fitted in the mounting groove. That is, the accommodating cavity is located in the mounting groove. A first foolproof positioning member 241 and a second foolproof positioning member 242 are positioned from top to bottom inside the cleaning tank 22. That is, the first foolproof positioning member 241 is located above the second foolproof positioning member 242. As shown in FIGS. 8 and 10, the filtration apparatus 40 is provided with a foolproof limiting member 46 and an indicating member 421. When the foolproof limiting member 46 matches the first foolproof positioning member 241, the indicating member 421 indicates that the filtration apparatus 40 is not mounted in place. When the foolproof limiting member 46 matches the second foolproof positioning member 242, the indicating member 421 indicates that the filtration apparatus 40 is mounted in place.

The arrangement of the indicating member 421 has a good prompting effect so that when the indicating member 421 indicates that the filtration apparatus 40 is not mounted in place, the user can adjust the mounting position of the filtration apparatus 40 relative to the mounting groove of the cleaning tank 22, so as to determine, based on an indication by the indicating member 421, whether the filtration apparatus 40 is accurately mounted at a proper position of the cleaning tank 22. In other words, through the cooperation of the two foolproof positioning members 241, 242, the foolproof limiting member 46, and the indicating member 421, it can be quickly and accurately determined whether the filtration apparatus 40 is correctly and accurately mounted at a proper position of the cleaning tank 22, so as to remind the user to perform a corresponding operation. The structure is simple and is convenient for use.

In other words, in the base station 20 provided by the embodiments of the present disclosure, the first foolproof positioning member 241 and the second foolproof positioning member 242 are positioned on the base station body 21, and the foolproof limiting member 46 and the indicating member 421 are positioned on the filtration apparatus 40. Thus, the filtration apparatus 40 can filter the liquid discharged from the cleaning tank 22, detect the liquid level in the cleaning tank 22, and determine whether the filtration apparatus 40 is mounted in place relative to the cleaning tank 22. At the same time, it can be prompted as to whether the filtration apparatus 40 is properly mounted in place relative to the cleaning tank 22. This expands functions of the filtration apparatus 40, diversifies the functions of the filtration apparatus 40, and meets the design requirements for a base station 20 with a compact structure.

Further, other foolproof positioning members other than the first foolproof positioning member 241 and the second foolproof positioning member 242 may be provided on the base station body 21. In other words, the number of foolproof positioning members may be at least three. For example, the number of foolproof positioning members is three, four, or other values that meet requirements. Different numbers of foolproof positioning members can meet requirements for different mounting positions of the filtration apparatus 40 relative to the cleaning tank 22 and requirements for different structures of the filtration apparatus 40. It can be understood that, in some embodiments, the number of foolproof positioning members may be one. That is, when the foolproof positioning member matches the foolproof limiting member 46, the indicating member 421 indicates that the filtration apparatus 40 is mounted in place. Otherwise, the indicating member 421 indicates that the filtration apparatus 40 is not mounted in place. Such an arrangement facilitates a further simplified structure.

In the above embodiment, as shown in FIG. 13, the first foolproof positioning member 241 and the second foolproof positioning member 242 are positioned above the mounting groove. For example, the first foolproof positioning member 241 and the second foolproof positioning member 242 are positioned on the inner side wall of the cleaning tank 22. That is, the first foolproof positioning member 241 is positioned above the second foolproof positioning member 242. The indicating member 421 may include a planar structure located above the foolproof limiting member 46. For example, the indicating member 421 is the top surface of the filtration apparatus. When the user is mounting the filtration apparatus 40, such as only placing the filtration apparatus 40 in the mounting groove without applying a downward pressure to the filtration apparatus 40, the foolproof limiting member 46 will be resisted by the first foolproof positioning member 241. At this time, the indicating member 421-that is, the planar structure above the foolproof limiting member 46-is higher than the tank top 221 of the cleaning tank 22, indicating that the filtration apparatus 40 is not mounted in place. That is, the side wall of the filtration apparatus 40 close to the inside of the cleaning tank 22 will protrude from the bottom part of the cleaning tank 22. At this time, liquid at the bottom part of the cleaning tank 22 outside the mounting groove may not flow smoothly through the filtration apparatus 40 with obstruction by the side wall. For example, the liquid cannot flow into the accommodating cavity through the filter screen 42. Therefore, the filtration apparatus 40 needs to be remounted. Since the indicating member 421 obviously protrudes from the cleaning tank 22, it can remind the user that the filtration apparatus 40 is not mounted in place. After the user gets the indication, the user may apply a downward pressure to the filtration apparatus 40 to impel the foolproof limiting member 46 to run downward and match the second foolproof positioning member 242. That is, the foolproof limiting member 46 is located at the lower surface of the second foolproof positioning member 242. At this time, the indicating member 421-that is, the planar structure of the foolproof limiting member 46-is located in the cleaning tank 22. That is, the planar structure is located below the tank top 221 of the cleaning tank 22 or flush with the tank top 221, indicating that the filtration apparatus 40 is mounted in place. At this time, the liquid at the bottom part of the cleaning tank 22 outside the mounting groove can smoothly flow through the filtration apparatus 40 to achieve filtration. That is, the liquid can smoothly flow into the accommodating cavity through the filter screen 42.

The indicating member 421 is a planar structure located above the foolproof limiting member 46. The planar structure is convenient for a flatness comparison with other components, and it is also convenient for the user to confirm whether the filtration apparatus 40 is mounted in place through the planar structure. In addition, the planar structure is easy to process and easy to implement, and, therefore, it is suitable for popularization and application. Further, it is possible to paint colors or provide an indicator light on the planar structure to further facilitate identification, such as painting yellow, red or other relatively bright colors on the planar structure, so that the user can quickly and accurately find the position of the planar structure and determine whether the planar structure protrudes from the tank top 221 of the cleaning tank 22, so as to determine whether the filtration apparatus 40 is mounted in place.

In other words, in the base station 20 provided by the embodiments of the present disclosure, by providing the mounting groove at the bottom part of the cleaning tank 22 and utilizing a positional relationship between the top surface of the filtration apparatus 40 and the tank top 221 of the cleaning tank 22, such as whether the top surface of the filtration apparatus 40 protrudes from the cleaning tank 22, it can be determined whether the filtration apparatus 40 is accurately mounted in place relative to the cleaning tank 22. This avoids any problem that the filtration apparatus 40 and the cleaning tank 22 are not mounted in place, and that the non-contact sensing element detects the non-contact sensed element, so that mounting accuracy of the filtration apparatus 40 is improved. The structure is simple and easy to implement, and has a good prompting effect with an accurate prompting result, which helps the user to confirm whether the filtration apparatus 40 is mounted in place.

The provision of the first foolproof positioning member 241, the second foolproof positioning member 242, and the foolproof limiting member 46 can limit the movement of the filtration apparatus 40 relative to the cleaning tank 22-for example, limiting the movement of the filtration apparatus 40 relative to the cleaning tank 22 in a vertically upward direction, thereby facilitating implementation of pre-positioning of the filtration apparatus 40 in a mounting process and implementation of a reliable connection between the filtration apparatus 40 and the base station body 21. The structure is simple and easy to implement.

In an embodiment of the present disclosure, the second foolproof positioning member 242 can further play the role of fixing the filtration apparatus 40 when the filtration apparatus 40 is mounted into the mounting groove in place. In addition, the first foolproof positioning member 241 is located above the second foolproof positioning member 242. Thus, when the foolproof limiting member 46 is pushed up by the first foolproof positioning member 241, it can more clearly signal the user that the filtration apparatus 40 is not correctly mounted into the cleaning tank 22, which is conducive to improving the working reliability of the base station 20.

In the above embodiment, as shown in FIGS. 8 and 10, the filtration apparatus 40 includes a connecting portion 47 connected to the filter screen 42 and extending beyond the mounting groove, and the foolproof limiting member 46 is positioned on the connecting portion 47. Such an arrangement avoids the problem that the foolproof limiting member 46 is positioned in the mounting groove so that a gap between the filtration apparatus 40 and the mounting groove is relatively large, and thus part of the liquid cannot flow through the filtration apparatus 40, thereby affecting the filtering effect. That is, by matching the foolproof limiting member 46 with the second foolproof positioning member 242 located above the mounting groove, it is conducive to improving the tightness of the connection between the filtration apparatus 40 and the mounting groove, thereby ensuring a good filtering effect.

One end of the connecting portion 47 is connected with the filter screen 42, and an end of the connecting portion 47 away from the filter screen 42 is provided with a planar structure. That is, the planar structure is positioned at the top of the connecting portion 47. In this way, the arrangement of the foolproof limiting member 46 and the indicating member 421 is realized through the connecting portion 47, and the structure is compact, which can meet the design requirements for a base station with a small volume and a compact structure.

Further, the connecting portion 47 is connected to the filter screen 42, such as the integral formation of the connecting portion 47 and the filter screen 42, which is conducive to improving the reliability of the connection between the connecting portion 47 and the filter screen 42 and is convenient for production, simplifies an assembly process, and reduces manufacturing costs.

In the above embodiment, the foolproof limiting member 46 includes a snap-fit structure, and both the first foolproof positioning member 241 and the second foolproof positioning member 242 are elastic members. The first foolproof positioning member 241 includes a first abutting portion 243 adapted to abut against the foolproof limiting member 46. The second foolproof positioning member 242 includes a second abutting portion 245 adapted to abut against the foolproof limiting member 46. The first abutting portion 243 is positioned above the second abutting portion 245. With such an arrangement, the movement of the filtration apparatus 40 relative to the base station body 21 can be limited by the abutment of the foolproof limiting member 46 with the first abutting portion 243 and the second abutting portion 245, and pre-positioning and detachable connection between the filtration apparatus 40 and the base station body 21 can be achieved by utilizing the elasticity of the first foolproof positioning member 241 and the second foolproof positioning member 242.

For example, during an assembly process of the filtration apparatus 40, when the snap-fit structure of the foolproof limiting portion 46 abuts against the first abutting portion 243 of the first foolproof positioning member 241, the upper planar structure of the connecting portion 47 of the filtration apparatus 40 is higher than the tank top 221 of the cleaning tank 22, indicating that the filtration apparatus 40 is not mounted in place. Since the first foolproof positioning member 241 is an elastic member, by overcoming the elastic force of the first foolproof positioning member 241 acting on the foolproof limiting member 46 and continuing to press down on the filtration apparatus 40, the snap-fit structure of the foolproof limiting member 46 is enabled to abut against the second abutting portion 245 of the second foolproof positioning member 242, and the upper planar structure of the connecting portion 47 of the filtration apparatus 40 will be located in the cleaning tank 22, such as the planar structure flush with the tank top 221 of the cleaning tank 22, or the planar structure lower than the tank top 221 of the cleaning tank 22, indicating that the filtration apparatus 40 is mounted in place. By utilizing the elastic force of the second foolproof positioning member 242 acting on the foolproof limiting member 46, the filtration apparatus 40 can be reliably and stably limited in the mounting groove, thereby implementing a reliable connection between the filter shaft and the base station body 21.

Further, as shown in FIGS. 8 and 9, the inner side wall of the mounting groove is provided with a groove structure, and the outer wall of the filtration apparatus 40 is provided with a protruding structure 422 adapted to match the groove structure. By matching the groove structure with the protruding structure 422, pre-positioning can be implemented for assembly of the filtration apparatus 40 and the mounting groove, which is conducive to improving the assembly efficiency of the filtration apparatus 40 and the mounting groove. It can be understood that the protruding structure 422 may alternatively be positioned on the outer wall of the housing 43.

In the above embodiment, as shown in FIG. 13, the first foolproof positioning member 241 further includes a first supporting portion 244 connecting the first abutting portion 243 and the base station body 21, which is conducive to improving the reliability of a connection between the first abutting portion 243 and the base station body 21. The second foolproof positioning member 242 further includes a second supporting portion 246 connecting the second abutting portion 245 and the base station body 21, which is conducive to improving the reliability of a connection between the second abutting portion 245 and the base station body 21. It can be understood that the first supporting portion 244 and the first abutting portion 243 may be an integral structure or a split structure, and the second supporting portion 246 and the second abutting portion 245 may be an integral structure or a split structure. In other words, the first foolproof positioning member 241 may be an integral structure or a split structure, and the second foolproof positioning member 242 may be an integral structure or a split structure. The integral structure is convenient for production, simplifies the assembly process, and helps to reduce manufacturing costs. The split structure is conducive to reducing the maintenance and replacement costs. Further, the first foolproof positioning member 241 and the second foolproof positioning member 242 may be integrated with the base station body 21, which is convenient for processing, simplifies an assembly process, and helps reduce manufacturing costs.

The first supporting portion 244 and/or the second supporting portion 246 may be an elastic bent structure. That is, the movement of the first abutting portion 243 and/or the second abutting portion 245 relative to the base station body 21 can be realized by utilizing the elastic deformation of the bent structure. Thus, the first abutting portion 243 and/or the second abutting portion 245 can be reliably and closely abutted against the snap-fit structure of the foolproof limiting member 46, or the snap-fit structure can be smoothly disengaged from the first abutting portion 243 and/or the second abutting portion 245. The structure is simple, easy to implement, and has low costs.

Specifically, the bent structure is at least one of L-shaped, Z-shaped, V-shaped, N-shaped, or M-shaped. Different shapes of the bent structure can meet requirements for different positions and different structures of the first abutting portion 243 and/or the second abutting portion 245. The first abutting portion 243 and/or the second abutting portion 245 may be protrusion(s), slot(s), or other structure(s) meeting requirements, which are not specifically limited in the embodiments of the present disclosure.

Specifically, as shown in FIG. 13, the side wall of the mounting groove is provided with a track groove 23 for the cleaning assembly 30 to pass therethrough, and the first foolproof positioning member 241 and the second foolproof positioning member 242 are positioned near one end of the track groove 23. This can reduce the impact of the first foolproof positioning member 241 and the second foolproof positioning member 242 on a moving range of the cleaning assembly 30, which is beneficial to greatly increasing the moving range of the cleaning assembly 30 and improving the cleaning effect.

The present disclosure is described through the above embodiments, but it should be understood that the above embodiments are for the purpose of illustration and description only and are not intended to limit the present disclosure to the scope of the described embodiments. In addition, those skilled in the art can understand that the present disclosure is not limited to the above embodiments, and more variations and modifications can be made based on the description of the present disclosure. These variations and modifications all fall within the protection scope of the present disclosure. The protection scope of the present disclosure is defined by the appended claims and their equivalents.

## Claims

1. A cleaning tank (22), configured to be disposed on a base station body (21) of a base station (20), and comprising:
a filtration apparatus (40), detachably positioned in the cleaning tank (22), wherein the filtration apparatus (40) is provided with a float assembly (41), the float assembly (41) is positioned on a side of the filtration apparatus (40), and the float assembly (41) comprises a float body (411) floating on a surface of liquid under an action of the liquid, wherein
one of a non-contact sensing element and a non-contact sensed element is positioned on the float body (411), and the other of the non-contact sensing element and the non-contact sensed element is positioned on the base station body (21), and
when the filtration apparatus (40) is positioned in the cleaning tank (22) and the surface of the liquid in the cleaning tank (22) is within a specific range, the non-contact sensing element is capable of detecting the non-contact sensed element.

2. The cleaning tank (22) according to claim 1, wherein
the filtration apparatus (40) is positioned on at least one side of a bottom part of the cleaning tank (22).

3. The cleaning tank (22) according to claim 1 or 2, wherein
a high liquid-level value of the cleaning tank (22) is a first preset threshold, and the specific range is less than or equal to the first preset threshold.

4. The cleaning tank (22) according to claim 1 or 2, wherein
the non-contact sensed element is positioned on the float body (411); and
the non-contact sensing element is positioned on the base station body (21).

5. The cleaning tank (22) according to claim 4, wherein
the non-contact sensed element comprises a magnetic member; and
the non-contact sensing element comprises a magnetic sensing element.

6. The cleaning tank (22) according to claim 1 or 2, wherein
the non-contact sensing element is electrically connected to a controller of the base station (20), for outputting a sensing result to the controller.

7. The cleaning tank (22) according to claim 1 or 2, wherein
the filtration apparatus (40) further comprises a filter screen (42) and a housing, the filter screen (42) is positioned above the housing and encloses an accommodating cavity with the housing, the filter screen (42) is used to filter some of the impurities carried by liquid flowing into the accommodating cavity through the cleaning tank (22), and the accommodating cavity is used to accommodate some of the solid impurities carried by the liquid in the accommodating cavity.

8. The cleaning tank (22) according to claim 7, wherein
the filter screen (42) is further provided with a fence (48), the fence (48) and part of an outer edge of the filter screen (42) are connected and enclose a mounting space interfacing with the accommodating cavity, the float body (411) is located in the mounting space along a horizontal direction, and filter holes (423) are disposed in the filter screen (42) outside the mounting space.

9. The cleaning tank (22) according to claim 7, wherein the float assembly (41) comprises:
a mounting bracket (412), detachably positioned on the filter screen (42) or formed on the filter screen (42); and
a connector, used to connect the mounting bracket (412) and one end of the float body (411), so that the float body (411) is rotatable relative to the mounting bracket (412).

10. The cleaning tank (22) according to claim 7, wherein
the base station (20) is provided with a sewage outlet (211), the filtration apparatus (40) further comprises a water outlet (44) in communication with the accommodating cavity and the sewage outlet (211), the water outlet (44) is located on at least one side of the filtration apparatus (40), and the water outlet (44) is higher than a bottom surface of the accommodating cavity.

11. The cleaning tank (22) according to claim 1, wherein
the one of the non-contact sensing element and the non-contact sensed element is configured to move with floating of the float body (411), and the other of the non-contact sensing element and the non-contact sensed element is positioned on a fixed position on the base station body (21).

12. The cleaning tank (22) according to claim 1, wherein
a bottom part of the cleaning tank (22) is arranged obliquely downward from a side away from the filtration apparatus (40) to a side close to the filtration apparatus (40).

13. A base station (20) comprising a base station body (21), wherein the cleaning tank (22) according to any one of claims 1 to 12 is disposed on the base station body (21).

14. A cleaning robot system, comprising:
a cleaning robot; and
the base station (20) according to claim 13, wherein the cleaning robot is adapted to dock on the base station (20).
